(19) Europäisches Patentamt
European Patent Office
Office européen des brevets

(11) EP 2 255 978 B1

(12) **EUROPEAN PATENT SPECIFICATION**

(45) Date of publication and mention of the grant of the patent:
**27.02.2013 Bulletin 2013/09**

(21) Application number: **09722473.7**

(22) Date of filing: **09.01.2009**

(51) Int Cl.:
***C08L 7/00*** *(2006.01)* ***C08L 9/06*** *(2006.01)*
***C08L 29/04*** *(2006.01)* ***B60C 5/14*** *(2006.01)*
***B60C 1/00*** *(2006.01)* ***B32B 25/08*** *(2006.01)*
***B32B 7/12*** *(2006.01)* *C08K 3/36* *(2006.01)*

(86) International application number:
**PCT/JP2009/050595**

(87) International publication number:
**WO 2009/116308 (24.09.2009 Gazette 2009/39)**

(54) **LAMINATE AND PNEUMATIC TIRE USING THE LAMINATE**
LAMINAT UND LUFTREIFEN UNTER VERWENDUNG DES LAMINATS
STRATIFIÉ ET PNEU UTILISANT CELUI-CI

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **18.03.2008 JP 2008070423**

(43) Date of publication of application:
**01.12.2010 Bulletin 2010/48**

(73) Proprietor: **The Yokohama Rubber Co., Ltd.**
**Minato-ku**
**Tokyo 105-8685 (JP)**

(72) Inventor: **MOROOKA, Naoyuki**
**Hiratsuka-shi**
**Kanagawa 254-8601 (JP)**

(74) Representative: **Vossius & Partner**
**Siebertstrasse 4**
**81675 München (DE)**

(56) References cited:
**EP-A1- 1 256 599**
**WO-A1-2007/100159**
**WO-A1-2008/013152**
**JP-A- 2006 224 854**

EP 2 255 978 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a laminate and a pneumatic tire using the same. More particularly, the present invention relates to a laminate comprising a thermoplastic resin composition layer and a rubber composition layer, and to a pneumatic tire using the same as a gas barrier layer of the tire.

In structures such as pneumatic tires and gas hoses containing gas in a hollow air-tight section, using a material having low gas permeability as the constituent material contacting the inner gas in order to prevent a decrease in the inner pressure caused by permeation of the gas to the outside through the constituent material is common. As the rubber material, a material having low gas permeability, such as butyl rubber, is used; however, since it increases the weight of the structure, as an alternative, providing a resin layer having low gas permeability is disclosed in (for example, Japanese Unexamined Patent Publication No. 6-40207).

In this case, when such a resin layer is applied to rubber products such as tires, since the adhesion between resin and rubber is low, it is necessary to provide an adhesive layer between the resin layer and rubber layer, and therefore the manufacturing process of the rubber product becomes complex (for example, Japanese Unexamined Patent Application No. 11-240108).

In addition, since the adhesive layer must contain a special compounding agent for adhesion and such compound agent is variable depending on the type of the resin and rubber to be adhered, the blend becomes complex and if the adhesive layer becomes hardened, it may fail after the production during use, for example, in such a manner that the hardened adhesive layer causes the rubber product to fail.

Therefore, particularly in laminates comprising a thermoplastic resin composition layer and a rubber composition layer, a laminate having high adhesion, as well as superior processability during production and superior durability, is demanded.

The object of the present invention is to provide a laminate having superior adhesion between the thermoplastic resin composition layer and rubber composition layer, as well as superior durability in use.

The present invention is a laminate comprising a thermoplastic resin composition layer and a rubber composition layer, wherein the thermoplastic resin composition layer comprises at least one selected from the group consisting of an ethylene-vinyl alcohol copolymer having an ethylene unit content of 20 to 50 mol%, an aliphatic polyamide having a molar ratio of methylene group to amide group of less than 5.4, and a meta-xylenediamine-adipic acid polycondensate; and wherein the rubber composition layer comprises 100 parts by weight of a rubber component and 30 to 120 parts by weight of a wet-process silica having a BET specific surface area of 100 to 300 $m^2/g$. The present invention is also a pneumatic tire using this laminate.

According to the present invention, a laminate having superior adhesion between the thermoplastic resin composition layer and rubber composition layer can be obtained, and a laminate having superior gas barrier properties and durability can also be provided. Such a laminate can be effectively used as a tire inner liner, etc.

In order to solve the aforementioned problems, the present inventors discovered that in a laminate comprising a thermoplastic resin composition layer and rubber composition layer, by selecting the thermoplastic resin constituting the thermoplastic resin composition layer from the group consisting of an ethylene-vinyl alcohol copolymer having an ethylene unit content of 20 to 50 mol%, an aliphatic polyamide having a molar ratio of methylene group to amide group of less than 5.4 and a meta-xylenediamine-adipic acid polycondensate, and by allowing the rubber composition layer to contain 100 parts by weight of rubber component and 30 to 120 parts by weight of a wet-process silica having a BET specific surface area of 100 to 300 $m^2/g$, a laminate having a superior adhesion between resin composition layer and rubber composition layer, as well as a superior durability, can be obtained, and also that such this laminate can be effectively used as a tire inner liner, etc.

According to the present invention, a laminate comprising a thermoplastic resin composition layer and a rubber composition layer, wherein the thermoplastic resin composition layer comprises at least one selected from the group consisting of an ethylene-vinyl alcohol copolymer having an ethylene unit content of 20 to 50 mol%, an aliphatic polyamide having a molar ratio of methylene group to amide group of less than 5.4 and a meta-xylenediamine-adipic acid polycondensate; and wherein the rubber composition layer comprises 100 parts by weight of rubber component and 30 to 120 parts by weight of a wet-process silica having a BET specific surface area of 100 to 300 $m^2/g$, can be provided.

The thermoplastic resin in the thermoplastic resin composition layer is an ethylene-vinyl alcohol copolymer (hereinafter, also referred to as "EVOH"), an aliphatic polyamide or a meta-xylenediamine-adipic acid polycondensate (hereinafter, also referred to as "MXD6").

As the ethylene-vinyl alcohol copolymer, one having an ethylene unit content of 20 to 50 mol%, preferably 20 to 40 mol%, is used. In cases where the ethylene unit content of the ethylene-vinyl alcohol copolymer is less than 20 mol%, the ethylene-vinyl alcohol copolymer becomes likely to be thermally decomposed, while in cases where it is greater than 50 mol%, the gas barrier properties of the ethylene-vinyl alcohol copolymer are deteriorated. The saponification degree of the ethylene-vinyl alcohol copolymer is not particularly restricted; however, it is preferably not less than 90%, more preferably not less than 99%. When the saponification degree of the ethylene-vinyl alcohol copolymer

is too low, the gas barrier properties of the ethylene-vinyl alcohol copolymer are deteriorated. Such ethylene-vinyl alcohol copolymer whose ethylene unit content is 20 to 50 mol% is commercially available and can be obtained under the trade names such as Soanol® V2504RB (ethylene unit content of 25 mol%) from Nippon Synthetic Chemical Industry Co., Ltd. and Eval® G156B from Kuraray Co., Ltd.

As the aliphatic polyamide, one comprising an amide group and a methylene group in which the molar ratio of the methylene group to the amide group is less than 5.4 is used. Examples of such aliphatic polyamide in which the molar ratio of the methylene group to the amide group is less than 5.4 include nylon 6, nylon 66, nylon 666 and nylon 46. It is not preferred that the molar ratio of the methylene group to the amide group in the aliphatic polyamide be greater than 5.4, since it reduces adhesion between the thermoplastic resin composition layer and the rubber composition layer comprising the wet-process silica. The lower limit of the range of the molar ratio of the methylene group to the amide group in the aliphatic polyamide is not particularly restricted; however, it is preferably not less than 5.

The polymerization degree of the ethylene-vinyl alcohol copolymer used in the present invention is not particularly restricted; however, the intrinsic viscosity thereof is preferably not less than 0.06 L/g, more preferably in the range of 0.07 to 0.2 L/g. The polymerization degrees of the aliphatic polyamide and the meta-xylenediamine-adipic acid polycondensate are also not particularly restricted, and it is preferred that their relative viscosity, which is 1% concentrated sulfuric acid solution at 25°C, be in the range of 1.5 to 5.0.

The basic structure of the meta-xylenediamine-adipic acid polycondensate is represented by the following chemical formula:

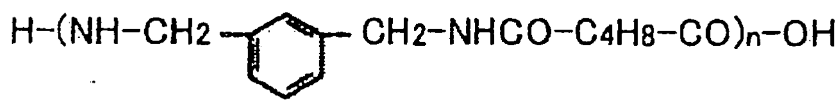

Such *meta*-xylenediamine-adipic acid polycondensate is commercially available and can be obtained, for example, under the trade name MX-nylon S6121 from Mitsubishi Gas Chemical Company, Inc.

The wet-process silica contained in the rubber composition constituting the rubber composition layer of the laminate according to the present invention refers to a silica synthesized by a neutralization reaction between sodium silicate and mineral acid. Included in wet-process silicas are those silicas obtained by a precipitation method and those obtained by a gel method, and either type of silicas may be used. In the present invention, a wet-process silica satisfying the BET specific surface area of 100 to 300 $m^2/g$ is used. Here, the term "BET specific surface area" refers to a value measured by a surface area measuring device using the simple BET method. From the standpoint of improving adhesion between the rubber composition and the thermoplastic resin composition, it is preferred to use a wet-process silica whose BET specific surface area is 100 to 300 $m^2/g$. Such wet-process silica is commercially available and can be obtained under the trade names such as Zeosil® 165GR (BET specific surface area of 160$m^2/g$) and Zeosil®1115MP (BET specific surface area of 120$m^2/g$) from Rhodia.

From the standpoints of the adhesion between the rubber composition and the thermoplastic resin composition, as well as extrusion and calendering processabilities of the rubber composition, it is preferred that the amount of the wet-process silica blended in the rubber composition be 30 to 120 parts by weight, taking the total weight of the rubber component in the composition as 100 parts by weight. A blended amount of less than 30 parts by weight is not preferred since the improving effect on the adhesion between the rubber composition and the thermoplastic resin composition is reduced, while the viscosity of the rubber composition becomes notably high after mixing and subsequent extrusion- and calender-sheeting steps become difficult when the blended amount exceeds 120 parts by weight.

It is preferred to allow the value of the BET specific surface area ($m^2/g$) of the wet-process silica in the rubber composition multiplied by the wet-process silica content (parts by weight) based on 100 parts by weight of the rubber component, i.e., the total surface area of the wet-process silica in the rubber composition, to satisfy the following formula (1):

$$\text{BET specific surface area } (m^2/g) \times \text{content (parts by weight)} \geq 4000 \cdots\cdots (1),$$

since the interaction between the polar group (-OH, - CONH-) present in the thermoplastic resin composition used in the present invention and the silanol group (-SiOH) present on the surface of the wet-process silica can be improved and an adhesion of a practical level can be attained.

It is more preferred that the value of the BET specific surface area multiplied by the wet-process silica content, which is represented by the aforementioned formula, be less than 25,000, since a poor dispersion due to the interaction

between the silicas in the rubber composition can be prevented.

As the rubber component of the rubber composition, diene rubbers, for example, natural rubbers, isoprene rubbers, styrene-butadiene copolymer rubbers and butadiene rubbers are preferred. In addition, another rubber component such as an ethylene-propylene copolymer rubber or brominated butyl rubber may be admixed individually or in combination with yet another rubber component.

Further, it is preferred that the rubber composition contain a silane coupling agent having an alkoxysilyl group and an epoxy group. By allowing the rubber composition to contain 1 to 15 parts by weight of the silane coupling agent having an alkoxysilyl group and an epoxy group based on 100 parts by weight of the wet-process silica, a silanization reaction takes place between the silanol group present on the wet-process silica surface and the alkoxysilyl group in the silane coupling agent to make the wet-process silica surface an epoxy group-treated surface, thereby imparting an improving effect on the interaction between the rubber composition and the thermoplastic resin composition used in the present invention. Examples of such silane coupling agent having an alkoxysilyl group and an epoxy group include β-(3,4-epoxycyclohexyl)ethyltrimethoxy silane, β-(3,4-epoxycyclohexyl)ethyltriethoxy silane, γ-glycidoxypropyltrimethoxy silane and γ-glycidoxypropylmethyldiethoxy silane. The content of the silane coupling agent in the rubber composition is, based on 100 parts by weight of wet-process silica, preferably 1 to 15 parts by weight, more preferably 1 to 10 parts by weight. A content of less than 1 part by weight is not preferred since the improving effect on the adhesion between the rubber composition and the thermoplastic resin composition is reduced. In contrast, a content of greater than 15 parts by weight is not preferred since it causes the silane coupling agent to remain as a non-reacted matter in the rubber component matrix without reacting with the wet-process silica surface, thereby not only being unable to impart an adhesion improving effect on the interaction between the rubber composition and the thermoplastic resin composition, but also causing a decrease in the vulcanization rate in the subsequent vulcanization step, as well as a decrease in the storage stability when not vulcanized. The wet-process silica may be mixed and treated in advance with the silane coupling agent before blending the thus treated silica into the rubber component, or the silane coupling agent may be blended into the rubber composition separately with the silica.

In addition to the aforementioned components, may be blended in the rubber composition according to the present invention are various additives that are commonly blended in rubber compositions for tires and other purposes, for example, reinforcing agents (fillers) other than silicas such as carbon black, vulcanization- or cross-linking-promoting agents, age resisters and plasticizers. Such additives may be kneaded into a composition by a common method used in vulcanization or cross-linking. The amount of these blended additives may be any conventionally common amount, as long as it is consistent with the object of the present invention.

Examples of the method of producing the laminate include a method in which the thermoplastic resin composition and the rubber composition are co-extruded, a method in which the thermoplastic resin composition and the rubber composition are each made into a film and the thus formed films are subsequently laminated together by rolling, and a method in which one of the compositions is made into a film onto which the other composition is extruded and rolled; however, a method in which the thermoplastic resin composition and the rubber composition are each made into a film and the thus formed films are subsequently laminated together by rolling is preferred.

The thickness of the laminate is not particularly restricted; however, it is preferably 0.1 to 10 mm, more preferably 0.3 to 1 mm, in cases where the laminate is used as a gas barrier layer or an inner liner of a pneumatic tire. The thickness of the thermoplastic resin composition layer constituting the laminate is preferably 1 to 50 μm, more preferably 5 to 30 μm. The thickness of the rubber composition layer constituting the laminate is preferably 0.1 to 10 mm, more preferably 0.3 to 1 mm.

To explain one example of the method of producing a pneumatic tire using the laminate according to the present invention as a gas barrier layer or inner liner, the laminate according to the present invention is cylindrically pasted onto a tire-forming drum in such a manner that the thermoplastic resin composition layer of the laminate sits on the drum side. Thereonto, members used in a conventional tire production, such as a carcass layer, belt layer and tread layer which are made of non-vulcanized rubber, are sequentially laminated and the drum is then removed to obtain a green tire. Subsequently, by heat-vulcanizing the thus obtained green tire in accordance with a conventional method, a desired pneumatic tire can be produced.

## EXAMPLES

The present invention will now be further described by way of examples thereof; however, the scope of the present invention is not limited thereto.

### Preparation of laminate

In accordance with the formulations indicated in Tables 1 and 2, the compounding agents except the vulcanizing agent were kneaded at a preset temperature of 70°C for 5 minutes using a 1.7-litre Banbury mixer to obtain a master

batch. Subsequently, the vulcanizing agent was kneaded using an 8-inch roller to obtain a non-vulcanized rubber composition. The thermoplastic resin sheets indicated in Table 3 were prepared and the thus prepared sheets were each cut into a piece of 15 cm x 15 cm. Each of the thus cut sheets was sequentially laminated in combination with the rubber composition and the thermoplastic resin indicated in Tables 1 and 2, and the resultant was vulcanized at 170°C for 10 minutes to obtain a laminate. The thus obtained laminate was subjected to the evaluation of the adhesion after repeated deformations and tire running test in which the laminate was used for the tire. The results are shown in Table 1 and Table 2.

Evaluation of the adhesion after repeated deformations

Using a molding machine equipped with a 40 mmϕ extruder and a T-die, a monolayer film having a thickness of 10 μm was obtained from a pellet of each thermoplastic resin indicated in Table 3. Next, in accordance with the formulations indicated in Tables 1 and 2, the compounding agents except the vulcanizing agent were kneaded at a preset temperature of 70°C for 5 minutes using a 1.7-litre Banbury mixer to obtain a master batch. Subsequently, the vulcanizing agent was kneaded using an 8-inch roller to obtain a non-vulcanized rubber composition having a thickness of 2 mm. Each of the thus obtained sheets was sequentially laminated in combination with the aforementioned film and the non-vulcanized rubber composition, and the resultant was vulcanized at 170°C for 10 minutes and cut into the form of a strip having a width of 25 mm and a length of 100 mm. A cutting scratch was then made in the width direction on the central portion of the thermoplastic resin composition film to prepare a sample. After subjecting the thus obtained sample to continuous tensile strains repeated for 100,000 times at a chuck distance of 60 mm and 5 mm strokes using De Mattia Flex Cracking Tester manufactured by Ueshima Seisakusho Co., Ltd., the peeling of the film from the cutting scratch was visually observed and evaluated based on the following criteria:

Very good: No peeling of the film was observed.
Good: Minor peeling of not greater than 2 mm from the cutting scratch and/or destruction of the rubber material was/were observed.
Moderate: Peeling of not less than 2 mm and not greater than 10 mm occurred from the cutting scratch, resulting in an interfacial peeling.
Bad: Major peeling occurred from the cutting scratch, resulting in interfacial peeling.

Tire running test

Using a molding machine equipped with a 40 mmϕ extruder and a T-die, a monolayer film having a thickness of 10 μm was obtained from a pellet of each thermoplastic resin indicated in Table 3. Next, in accordance with the formulations indicated in Tables 1 and 2, the compounding agents except the vulcanizing agent were kneaded at a preset temperature of 70°C for 5 minutes using a 1.7-litre Banbury mixer to obtain a master batch. Subsequently, the vulcanizing agent was kneaded using an 8-inch roller to obtain a non-vulcanized rubber composition having a thickness of 0.5 mm, and each of the thus obtained sheets was sequentially laminated in combination with the aforementioned film and the non-vulcanized rubber composition. Using the resultant as tire inner liner (material for gas barrier layer), a steel radial tire (having a size of 195/65R15) was prepared via vulcanization step. The thus obtained steel radial tire was mounted on a standard rim prescribed by the JATMA Standard and inflated to a pressure of 140 kPa. The thus obtained tire was driven on a drum having an external dimension of 1,700 mm at room temperature of 38°C over a distance of 10,000 km with a load of 300 kN and at a speed of 80 km/h. Thereafter, the presence or absence of peeling at the edges of the gas barrier layer was observed and evaluated based on the following criteria:

Very good: No peeling
Good: Peeling of not greater than 2 mm
Moderate: Peeling of not less than 2 mm and not greater than 10 mm
Bad: Peeling of not less than 10 mm

Table 1

| | Comparative Example 1 | Comparative Example 2 | Comparative Example 3 | Example 1 | Comparative Example 4 | Comparative Example 5 | Comparative Example 6 | Example 2 | Example 3 | Example 4 |
|---|---|---|---|---|---|---|---|---|---|---|
| Natural rubber *1 | 50 | 50 | 50 | 50 | 50 | 50 | 50 | 50 | 50 | 50 |
| Emulsion-polymerized SBR *2 | 50 | 50 | 50 | 50 | 50 | 50 | 50 | 50 | 50 | 50 |
| Halogenated butyl rubber *3 | | | | | | | | | | |
| Butadiene rubber *4 | | | | | | | | | | |
| Aroma oil *5 | 10 | 10 | 10 | 10 | 10 | 10 | 10 | 10 | 20 | 15 |
| GPF carbon black *6 | 50 | | 30 | 30 | | | 30 | 30 | | |
| SAF carbon black *7 | | 50 | | | | | | | | |
| Wet-process silica 1 *8 | | | 20 | | | | | 30 | 100 | 70 |
| Wet-process silica 2 *9 | | | | 30 | | | | | | |
| Silica-50 *10 | | | | | 60 | | | | | |
| AEROSIL R974 *11 | | | | | | 70 | | | | |
| AEROSIL R972 *12 | | | | | | | 90 | | | |
| Zinc oxide *13 | 3 | 3 | 3 | 3 | 3 | 3 | 3 | 3 | 3 | 3 |
| Stearic acid *14 | 1 | 1 | 1 | 1 | 1 | 1 | 1 | 1 | 1 | 1 |
| Age resister (6C) *15 | 2 | 2 | 2 | 2 | 2 | 2 | 2 | 2 | 2 | 2 |
| Diphenyl guanidine *16 | | | 0.5 | 0.5 | 0.5 | 0.5 | 0.5 | 0.5 | 0.5 | 0.5 |
| Sulfur *17 | 1.5 | 1.5 | 1.5 | 1.5 | 1.5 | 1.5 | 1.5 | 1.5 | 1.5 | 1.5 |
| CZ *18 | 1.5 | 1.5 | 1.5 | 1.5 | 1.5 | 1.5 | 1.5 | 1.5 | 1.5 | 1.5 |
| Thermoplastic resin type | EVOH (1) | EVOH (1) | EVOH (1) | EVOH (1) | EVOH (1) | EVOH (1) | EVOH (1) | EVOH (1) | EVOH (1) | EVOH (1) |
| BET specific surface area × silica content | - | - | 3,200 | 3,600 | 3,000 | 11,900 | 9,900 | 4,800 | 11,200 | 11,200 |
| Evaluation of the adhesion after repeated deformations | Bad | Bad | Bad | Moderate | Bad | Bad | Bad | Good | Good | Good |
| Tire running test | Bad | Bad | Bad | Moderate | Bad | Bad | Bad | Good | Good | Good |

Table 1 (continued)

| | Example 5 | Example 6 | Example 7 | Example 8 | Example 9 | Example 10 | Example 11 | Comparative Example 7 | Example 12 |
|---|---|---|---|---|---|---|---|---|---|
| Natural rubber *1 | 25 | 25 | 25 | 50 | 50 | 50 | 50 | 50 | 50 |
| Emulsion-polymerized SBR *2 | 50 | 50 | 50 | 50 | 50 | 50 | 50 | 50 | 50 |
| Halogenated butyl rubber *3 | 25 | | | | | | | | |
| Butadiene rubber *4 | | 25 | 25 | | | | | | |
| Aroma oil *5 | 10 | 10 | 10 | 10 | 10 | 10 | 10 | 10 | 10 |
| GPF carbon black *6 | | | | | | | | | |
| SAF carbon black *7 | | | | | | | | 30 | |
| Wet-process silica 1 *8 | 70 | 70 | | 70 | 70 | 70 | 70 | 70 | 70 |
| Wet-process silica 2 *9 | | | 70 | | | | | | |
| Silica-50 *10 | | | | | | | | | |
| AEROSIL R974 *11 | | | | | | | | | |
| AEROSIL R972 *12 | | | | | | | | | |
| Zinc oxide *13 | 3 | 3 | 3 | 3 | 3 | 3 | 3 | 3 | 3 |
| Stearic acid *14 | 1 | 1 | 1 | 1 | 1 | 1 | 1 | 1 | 1 |
| Age resister (6C) *15 | 2 | 2 | 2 | 2 | 2 | 2 | 2 | 2 | 2 |
| Diphenyl guanidine *16 | 0.5 | 0.5 | 0.5 | 0.5 | 0.5 | 0.5 | 0.5 | 0.5 | 0.5 |
| Sulfur *17 | 1.5 | 1.5 | 1.5 | 1.5 | 1.5 | 1.5 | 1.5 | 1.5 | 1.5 |
| CZ *18 | 1.5 | 1.5 | 1.5 | 1.5 | 1.5 | 1.5 | 1.5 | 1.5 | 1.5 |
| Thermoplastic resin type | EVOH (1) | EVOH (1) | EVOH (1) | MXD6 | nylon 6 | nylon 6.66 | nylon 66 | nylon 612 | EVOH (2) |
| BET specific surface area × silica content | 11,200 | 11,200 | 8,400 | 11,200 | 11,200 | 11,200 | 11,200 | 11,200 | 11,200 |
| Evaluation of the adhesion after repeated deformations | Good | Good | Good | Good | Good | Good | Good | Bad | Good |
| Tire running test | Good | Good | Good | Good | Good | Good | Good | Bad | Good |

Table 2

| | Comparative Example 8 | Comparative Example 9 | Comparative Example 10 | Comparative Example 11 | Example 13 | Example 14 | Example 15 | Example 16 | Example 17 |
|---|---|---|---|---|---|---|---|---|---|
| Natural rubber *1 | 50 | 50 | 50 | 50 | 50 | 50 | 50 | 50 | 50 |
| Emulsion-polymerized SBR *2 | 50 | 50 | 50 | 50 | 50 | 50 | 50 | | |
| Aroma oil *5 | 10 | 10 | 10 | 10 | 10 | 10 | 10 | 50 10 | 50 10 |
| GPF carbon black *5 | 70 | 70 | 70 | 70 | | | | | |
| wet-process silica 1 *8 | | | | | 70 | 70 | 70 | 70 | 70 |
| γ-glycidoxypropyltrimethoxy· silane *19 | 3.5 | | | | | 1 | 3.5 | 6 | |
| γ-glycidoxypropylmethyldimethoxy silane *20 | | 3.5 | 3.5 | 3.5 | | | | | 3.5 |
| Vinyltriethoxy silane *1 | | | | | 5 | | | | |
| Zinc oxide *13 | 3 | 3 | 3 | 3 | 3 | 3 | 3 | 3 | 3 |
| Stearic acid *14 | 1 | 1 | 1 | 1 | 1 | 1 | 1 | 1 | 1 |
| Age resister (6C) *15 | 2 | 2 | 2 | 2 | 2 | 2 | 2 | 2 | 2 |
| Diphenyl guanidine *16 *17 | 0.5 | 0.5 | 0.5 | 0.5 | 0.5 | 0.5 | 0.5 | 0.5 | 0.5 |
| Sulfur *18 | 1.5 | 1.5 | 1.5 | 1.5 | 1.5 | 1.5 | 1.5 | 1.5 | 1.5 |
| CZ | 1.5 | 1.5 | 1.5 | 1.5 | 1.5 | 1.5 | 1.5 | 1.5 | 1.5 |
| Thermoplastic resin type | EVOH (1) | EVOH (1) | EVOH (1) | EVOH (1) | EVOH (1) | EVOH (1) | EVOH (1) | EVOH (1) | EVOH (1) |
| BET specific surface area x silica content | - | - | - | - | 11,200 | 11,200 | 11,200 | 11,200 | 11,200 |
| Evaluation of the adhesion after repeated deformations | Bad | Bad | Bad | Bad | Moderate | Very good | Very good | Very good | Very good |

(continued)

| | Comparative Example 8 | Comparative Example 9 | Comparative Example 10 | Comparative Example 11 | Example 13 | Example 14 | Example 15 | Example 16 | Example 17 |
|---|---|---|---|---|---|---|---|---|---|
| Tire running test | Bad | Bad | Bad | Bad | Moderate | very good | Very good | Very good | Very good |

*1 SR120 (manufactured by PT.NUSIRA)
*2 NIPOL 1502 (manufactured by Zeon Corporation)
*3 BRCMOBUTYL X2 (manufactured by LANXESS Rubber)
*9 NIPOL BR 1220 (manufactured by Zeon Corporation)
*5 Extract #4S (manufactured by Showa Shell Sekiyu K.K.)
*6 HTC #G (manufactured by Nippon Steel Chemical Carbon Co., Ltd.)
*7 Seast 9M (manufactured by Tokai Carbon Co., Ltd.)
*8 Zeosil® 165GR(manufactured by Rhodia); BET specific surface area of 160 $m^2$/g
*9 Zeosil® 1115MP (manufactured by Rhodia); BET specific surface area 120 $m^2$/g
*10 (synthetic product): synthesized in accordance with a precipitation method by a neutralization reaction between sodium silicate and sulfuric acid a condition of pH 7 to pH 10; BET specific surface area of 50$m^2$/g
*11 AEROSIL R974 (manufactured by Degussa); BET specific surface area of 170 $m^2$/g
*12 AEROSIL R972(manufactured by Degussa); BET specific surface area of 110$m^2$/g
*13 Three types of zinc oxides (manufactured by Seido Chemical Industry Co., Ltd.)
*14 Beads stearic acid YR (manufactured by NOF Corporation)
*15 SANTOFLEX 6PPD (manufactured by FLEXSYS)
*16 Soxinol D-G (manufactured by Sumitomo Chemical Co., Ltd.)
*17 Golden Flower sulfur powder 150 mesh (manufactured by Tsurumi Chemical Industry Co., Ltd.)
*18 Nocceler CZ-G (manufactured by Ouchi Shinko Chemical Industrial Co., Ltd.)
*19 A-187 (manufactured by Nippon Unicar Co., Ltd.)
*20 AZ-6137 (manufactured by Nippon Unicar Co., Ltd.)
*21 KBE-1003(marufactured by Shin-Etsu Chemical Co., Ltd.)

Table 3

| | Trade name | Ethylene composition ratio mol% | methylene group / amide group molar ratio | Manufacturer |
|---|---|---|---|---|
| EVOH (1) | Soanol® V2504RB | 25 | - | Nippon Synthetic Chemical Industry Co., Ltd. |
| EVOH (2) | Eval® G156B | 46 | - | Kuraray Co., Ltd. |
| MXD6 | MX nylon S6121 | - | - | Mitsubishi Gas Chemical Company, Inc. |
| nylon 6 | UBE nylon 1030B | - | 5 | Ube Industries, Inc. |
| nylon 66 | UBE nylon 2026B | - | 5 | Ube Industries, Inc. |
| nylon 6.66 | USE nylon 5033B | - | 5 | Ube Industries, Inc. |
| nylon 612 | Bestamide D22 | - | 8 | Daicel-Degussa Ltd. |

Examples 1 to 7 and 12

The rubber composition to which the wet-process silica used in the present invention was blended in the amount described in Table 1 was employed to prepare the laminates with EVOH resin. As a result, good adhesion and durability were obtained for all of the laminates.

Examples 8 to 11

The rubber composition to which the wet-process silica used in the present invention was blended in the amount described in Table 1 was employed to prepare the laminates with the polyamide resin type described in Table 1. As a result, all of the laminates exhibited good adhesion and durability.

Examples 13 to17

The rubber composition to which the wet-process silica and silane coupling agent used in the present invention were blended in the amount described in Table 2 was employed to prepare the laminates with EVOH resin. As a result, all of the laminates exhibited good adhesion and durability.

Comparative Examples 1 and 2

The rubber composition layer to which carbon black was blended in place of the wet-process silica used in the present invention was employed to prepare the laminates. As a result, both laminates exhibited poor adhesion and durability.

Comparative Example 3

The rubber composition layer in which 20 parts by weight of the wet-process silica used in the present invention was blended based on 100 parts by weight of the rubber component was employed to prepare the laminate with EVOH resin. As a result, the laminate exhibited poor adhesion and durability.

Comparative Examples 4 to 6

The rubber composition to which silica different from that of the wet-process silica used in the present invention was blended was employed to prepare the laminates with EVOH resin. As a result, all of the laminates exhibited poor adhesion and durability.

Comparative Example 7

The rubber composition to which the wet-process silica used in the present invention was blended in an amount described in Table 1 was employed to prepare the laminate with nylon 612 (the molar ration of the methylene group to the amide group is 8). As a result, the laminate exhibited poor adhesion and durability.

Comparative Examples 8 to 11

The rubber composition to which the silane coupling agent described in Table 1 was blended without using the wet-process silica used in the present invention was employed to prepare the laminates with EVOH resin. As a result, all of the laminates exhibited poor adhesion and durability.

INDUSTRIAL AVAILABILITY

In a laminate comprising a thermoplastic resin composition layer and rubber composition layer, by selecting the thermoplastic resin constituting the thermoplastic resin composition layer from the group consisting of ethylene-vinyl alcohol copolymer whose the ethylene unit content is 20 to 50 mol%, aliphatic polyamide in which the molar ratio of the methylene group to the amide group is less than 5.4 and *meta*-xylenediamine-adipic acid polycondensate and by allowing the rubber composition layer to contain, based on 100 parts by weight of rubber component, 30 to 120 parts by weight of wet-process silica whose BET specific surface area is 100 to 300 $m^2/g$, a laminate having a superior adhesion between thermoplastic resin composition layer and rubber composition layer, as well as superior durability, can be obtained, which can be effectively used as a tire inner liner, etc.

## Claims

1. A laminate comprising a thermoplastic resin composition layer and a rubber composition layer, wherein the thermoplastic resin composition layer comprises at least one selected from the group consisting of an ethylene-vinyl alcohol copolymer having an ethylene unit content of 20 to 50 mol%, an aliphatic polyamide having a molar ratio of methylene group to amide group of less than 5.4, and a meta-xylenediamine-adipic acid polycondensate; and wherein the rubber composition layer comprises 100 parts by weight of a rubber component and 30 to 120 parts by weight of a wet-process silica having a BET specific surface area of 100 to 300 $m^2/g$.

2. A laminate according to claim 1, wherein the BET specific surface area of the wet-process silica and the content of the wet-process silica based on 100 parts by weight of the rubber component satisfy the relationship represented by the following formula (I):

$$\text{BET specific surface area } (m^2/g) \times \text{content (parts by weight)} \geq 4000 \cdots\cdots (1).$$

3. A laminate according to claim 1 or claim 2, wherein the rubber component is at least one selected from the group consisting of natural rubbers, isoprene rubbers, styrene-butadiene copolymer rubbers, butadiene rubbers, ethylene-propylene copolymer rubbers and brominated butyl rubbers.

4. A laminate according to any one of claims 1 to 3, wherein the rubber composition layer comprises a silane coupling agent having an alkoxysilyl group and epoxy group, the content of the silane coupling agent in the rubber composition layer being 1 to 15 parts by weight based on 100 parts by weight of the wet-process silica.

5. A pneumatic tire, comprising a laminate according to any one of claims 1 to 4 as gas barrier layer.

6. A pneumatic tire, comprising a laminate according to any one of claims 1 to 4 as inner liner.

## Patentansprüche

1. Ein Laminat, welches eine thermoplastische Harzzusammensetzungsschicht und eine Kautschukzusammensetzungsschicht umfasst, wobei die thermoplastische Harzzusammensetzungsschicht mindestens eines aus der Gruppe bestehend aus einem Ethylen-Vinylalkohol-Copolymer mit einem Ethyleneinheitengehalt von 20 bis 50 Mol-%, einem aliphatischen Polyamid mit einem Molverhältnis von Methylengruppe zu Amidgruppe von weniger als 5,4 und einem *meta*-Xyloldiamin-Adipinsäure-Polykondensat umfasst; und wobei die Kautschukzusammensetzungsschicht 100 Gewichtsteile einer Kautschukkomponente und 30 bis 120 Gewichtsteile einer im Nassverfahren hergestellten Kieselsäure mit einer spezifischen BET-Oberfläche von 100 bis 300 $m^2/g$ umfasst.

**2.** Ein Laminat nach Anspruch 1, wobei die spezifische BET-Oberfläche der im Nassverfahren hergestellten Kieselsäure und der Gehalt der im Nassverfahren hergestellten Kieselsäure, bezogen auf 100 Gewichtsteile der Kautschukkomponente, die durch die folgende Formel (1) dargestellte Beziehung erfüllen:

$$\text{Spezifische BET-Oberfläche } (m^2/g) \times \text{Gehalt (Gewichtsteile)} \geq 4000 \ldots (1).$$

**3.** Ein Laminat nach Anspruch 1 oder Anspruch 2, wobei die Kautschukkomponente mindestens eine aus der Gruppe bestehend aus natürlichen Kautschuken, Isopren-Kautschuken, Styrol-Butadien-Copolymer-Kautschuken, Butadien-Kautschuken, Ethylen-Propylen-Copolymer-Kautschuken und bromierten Butylkautschuken ist.

**4.** Ein Laminat nach einem der Ansprüche 1 bis 3, wobei die Kautschukzusammensetzungsschicht ein Silankupplungsmittel mit einer Alkoxysilylgruppe und Epoxygruppe umfasst, der Gehalt des Silankupplungsmittels in der Kautschukzusammensetzungsschicht 1 bis 15 Gewichtsteile, bezogen auf 100 Gewichtsteile der im Nassverfahren hergestellten Kieselsäure, beträgt.

**5.** Ein Luftreifen, welcher ein Laminat nach einem der Ansprüche 1 bis 4 als Gasbarriereschicht umfasst.

**6.** Ein Luftreifen, welcher ein Laminat nach einem der Ansprüche 1 bis 4 als Innenauskleidung umfasst.

## Revendications

**1.** Laminé comprenant une couche de composition en résine thermoplastique et une couche de composition en caoutchouc, où la couche de composition en résine thermoplastique comprend au moins un sélectionné dans le groupe consistant en un copolymère d'éthylène alcool vinylique ayant une teneur unitaire d'éthylène de 20 à 50 mol%, un polyamide aliphatique ayant un rapport molaire du groupe méthylène au groupe amide inférieur à 5,4, et un polycondensat de méta-xylène diamine acide adipique ; et où la couche de composition en caoutchouc comprend 100 parties en poids d'un composant en caoutchouc et 30 à 120 parties en poids d'une silice de traitement humide ayant une aire de surface spécifique BET de 100 à 300 $m^2/g$.

**2.** Laminé selon la revendication 1, dans lequel l'aire de surface spécifique BET de la silice de traitement humide et la teneur de la silice de traitement humide basée sur 100 parties en poids du composant en caoutchouc satisfont à la relation représentée par la formule suivante (1) :

$$\text{aire de surface spécifique BET } (m^2/g) \text{ x teneur (parties en poids)} \geq 4000 \ldots (1).$$

**3.** Laminé selon la revendication 1 ou la revendication 2, dans lequel le composant en caoutchouc est au moins un sélectionné dans le groupe consistant en caoutchoucs naturels, caoutchoucs isoprène, caoutchoucs de copolymère styrène-butadiène, caoutchoucs de butadiène, caoutchoucs de copolymère éthylène-propylène et caoutchoucs butyle bromé.

**4.** Laminé selon l'une quelconque des revendications 1 à 3, dans lequel la couche de composition de caoutchouc comprend un agent de couplage de silane ayant un groupe alkoxysilyle et un groupe époxy, la teneur en agent de couplage de silane dans la couche de composition de caoutchouc représentant 1 à 15 parties en poids basé sur 100 parties en poids de la silice de traitement humide.

**5.** Bandage pneumatique, comprenant un laminé selon l'une quelconque des revendications 1 à 4 comme couche formant barrière aux gaz.

**6.** Bandage pneumatique, comprenant un laminé selon l'une quelconque des revendications 1 à 4 comme revêtement intérieur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6040207 A
- JP 11240108 A